# EUROPEAN PATENT APPLICATION

(11) **EP 4 276 043 A1**
(43) Date of publication of application: **15.11.2023**
(21) Application number: 23172474.1
(22) Date of filing: 10.05.2023
(51) Int. Cl.: B65G 67/24

(54) **SAFETY ARRANGEMENT FOR UNLOADING OF GOODS FROM A VEHICLE, A METHOD FOR UNLOADING GOODS FROM A VECHICLE, AND USE OF SUCH SAFETY ARRANGEMENT**

(30) Priority: 12.05.2022 SE 2250575
(71) Applicant: Marine Group MG AB, 941 21 Piteå (SE)
(72) Inventor: Lindbäck, Jan, 941 31 Piteå (SE)
(74) Representative: AWA Sweden AB

(57) **Abstract**

The present invention relates to a safety arrangement (1) for unloading of goods from a vehicle (11). The safety arrangement (1) comprises a curtain (2) comprising a plurality of flexible members (3), and a suspension structure (4), wherein the curtain (2) is suspended by the suspension structure (4), and wherein the suspension structure (4) is configured to be movable from a resting position to a goods-retaining position in which the longitudinal extension of the suspension structure (4) is arranged parallel to a longitudinal extension of said vehicle (11), wherein each flexible member (3) is configured to at least partially conform to the goods when the suspension structure (4) is in the goods-retaining position. The invention further relates to a port (10) comprising the safety arrangement (1), a method for unloading goods from a vehicle (11) with the safety arrangement (1), and use of the safety arrangement (1) for unloading a vehicle (11) carrying timber.

## Description

### Technical field

The present invention relates to a safety arrangement for preventing accident while unloading goods from a vehicle, such as a truck carrying timber.

### Background

During transportation, heavy goods, such as timber, is secured to the vehicle by a securing means, such as straps, so that the goods is prevented from falling onto surrounding traffic, pedestrians or vehicle operators. However, unloading the goods presents a risk, especially for vehicle operators, since the goods upon release of the securing means may fall down.

A solution to this problem is to provide the vehicle with a safety fence around the goods. Nonetheless, for a variety of reasons, this is not a satisfying solution. Firstly, the goods may be stacked too high, or in a way such that there still is a risk of fall. Secondly, having a safety fence on the vehicle increases the weight thereof, thereby increasing fuel consumption. More importantly, however, this solution is impractical, since it limits access to the goods, and therefore complicates unloading.

### Summary

In view of the above, an object of the present invention is to provide a safety arrangement to be used during unloading of goods and especially during the phase when securing means in the form of straps or the like are released, which operation requires at least one person working alongside the vehicle and the load.

The safety arrangement should be well suitable for goods of varying dimensions, and especially for timber.

A further object is to provide a port comprising such safety arrangement.

Yet another object is to provide a method for unloading goods with improved safety for personel working around the vehicle, and especially during releasing of securing means.

An additional object is to provide use of a safety arrangement for unloading a vehicle carrying timber.

Any benefit or technical effect discussed in relation any aspect of the present invention, and any embodiments thereof, may be applicable to any other aspect of the present invention.

According to a first aspect of the present invention, a safety arrangement for unloading of goods from a vehicle is provided, the safety arrangement comprising: a curtain comprising a plurality of flexible members; and a suspension structure having a longitudinal extension; wherein the curtain is suspended by the suspension structure, and wherein the suspension structure is configured to be movable from a resting position to a goods-retaining position in which the longitudinal extension of the suspension structure is arranged parallel to a longitudinal extension of said vehicle, wherein each flexible member is configured to at least partially conform to the goods when the suspension structure is in the goods-retaining position.

The safety arrangement, when in the goods-retaining position, provides a barrier between the goods and personnel unloading the goods, thereby providing safety for the personnel, since the curtain stops falling goods from hitting the personnel. Furthermore, since the safety arrangement may be brought between a resting position and a goods-retaining position, the safety arrangement may be selectively applied as a safety barrier, providing a practical and efficient safety solution.

A curtain comprising a plurality of flexible members is to be understood as being freely hanging under influence of gravity, such that each flexible member has a vertical extension substantially perpendicular to the longitudinal extension of the suspension structure. Thus, each flexible member comprises a first end portion which is attached to the suspension structure and a second end portion, distal to the first end portion, which is hanging freely.

By providing the curtain in the form of at least one flexible member, the curtain may, at least to some extent, conform to the form of the goods. Thereby, the dead weight of the curtain will contribute to holding the goods in position or at least slow down the speed of any falling objects and also force them towards the vehicle rather than allowing them to move towards a person standing next to the vehicle.

In the context of the present application, the term *"vehicle"* is, unless nothing else is explicitly given, to be understood as any vehicle or vessel, such as a truck or a boat, carrying goods.

Further, the term *"goods"* is to be understood as any kind of heavy and/or bulky cargo that neccesitates transport by vehicle, such as timber, boards, stone or sacks of grain, etc.

The suspension structure may be any structure that is rigid and strong enough to suspend at least one flexible member. In some embodiments, the suspension structure is a beam having a longitudinal extension. The beam may further be configured to extend substantially parallel to the vehicle when the suspension structure is in the goods retaining position. Alternatively, the beam may be configured to extend substantially transverse to the longitudinal extension of the vehicle in a condition when the suspension structure is in the goods retaining position

Each flexible member is configured to at least partially conform to the goods when the suspension structure is in the goods-retaining position. Hereby, the at least one flexible member may be set to be in contact with the goods, such that the dead weight of the at least one flexible member is applied to the goods in a retentive manner. Thus, the at least one flexible member not only protects against falling goods, but also further prevents the goods from falling. Furthermore, the at least one flexible member, when at least partially conforming to the goods, may exert increased friction against the goods. Hereby, sliding of the goods along the at least one flexible member is counteracted. To this end, a surface of the at least one flexible member may be formed so as to have a high frictional coefficient. For example, a surface of the at least one flexible member may be textured.

The at least one flexible member may be made of any kind of flexible material.

In some embodiments, the at least one flexible member is a chain. A chain may e.g., be composed of plates, rings or loops interconnected by pins. Alternatively, the chain may be composed of only rings or loops interwoven with each other.

Alternatively, the flexible member may be a rope. Alternatively, the flexible member may be a strap of a cloth material, polymer material or rubber material, or a combination thereof.

The curtain may comprise a plurality of chains. Alternatively, the plurality of flexible members may comprise both chains and another type of flexible member. For example, the plurality of flexible members may comprise at least one chain and at least one rope. Alternatively, the plurality of flexible members may comprise at least one chain and at least one strap of a cloth material, polymer material or rubber material, or a combination thereof.

In some embodiments, the plurality of flexible members may be spaced apart such that any flexible member is arranged at a distance to any neighboring flexible member.

Hereby, goods, but also securing means may more easily be accessed by an operator.

The distance between any two neighboring flexible members may e.g. be 10 cm, or 50 cm, or 100 cm, or 150 cm. The distance is dependent on the shape and dimension of the goods.

In some embodiments, the curtain may comprise a matt or a net.

The matt or net may provide a curtain having continuous extension. Hereby, a larger area of contact between the curtain and the goods is provided.

Alternatively, the matt or net may be discontinuous. For example, the matt or net mat be provided with a plurality of slits along a longitudinal extension of the curtain. Hereby, goods may more easily be accessed by an operator.

According to a second aspect of the present invention, a port for receiving a goods-carrying vehicle is provided, the port comprising: a vehicle platform configured to receive a goods-carrying vehicle, the vehicle platform having a longitudinal extension; a displacement system comprising at least one suspension rail extending transverse to the longitudinal extension of the vehicle platform; and at least one safety arrangement according to the first aspect of the present invention, the at least one safety arrangement being suspended by the at least one suspension rail; wherein the displacement system is configured to move the suspension structure of the at least one safety arrangement from the resting position to the goods retaining position.

Hereby, a port facilitating receiving a goods-carrying vehicle and unloading goods of the goods-carrying vehicle in an efficient, practical and safe manner is provided.

The vehicle platform may depending on the type of vehicle be landbased, such as in a garage or a parking area in the event the vehicle is a truck or the like. Alternatively, in the event the vehicle instead is a boat, the vehicle platform may be the water along a quayside.

In some embodiments, the port may comprise at least two safety arrangements on opposing sides of the vehicle platform as seen along the longitudinal extension of the vehicle platform.

Hereby, safety arrangement may be applied to both sides of a goods-carrying vehicle, such that unloading may be performed in a safe manner from both sides.

In some embodiments, the respective suspension structure of the at least two safety arrangements may be independently movable.

Hereby, a more versatile solution is provided. The respective suspension structures may e.g. be arranged at different distances to the goods. Furthermore, the port is able to adequately handle vehicles where the goods are only accessible from one side thereof. It is also made possible to selectively choose which of the at least two safety arrangements to move. Thereby, it is possible to not unduly block e.g. a crane on the vehicle.

In some embodiments, the port may further comprise a sensor arrangement configured to sense presence of any person on the vehicle platform, and wherein the sensor arrangement is configured to prevent the suspension structure from moving from the goods-retaining position to the resting position.

Hereby, a solution with improved safety is provided.

The sensor arrangement may e.g. comprise a camera. Additionally or alternatively, the sensor arrangement may comprise an optical movement sensor. Additionally or alternatively, the sensor arrangement may comprise an IR sensor. Additionally or alternatively, the sensor arrangement may comprise a radar sensor. It is also to be understood that the sensor arrangement may comprise a combination of one or more sensor types.

The sensor arrangement may be configured to prevent the suspension structure from moving from the goods-retaining position to the resting position such that the suspension structure may be moved from the goods-retaining position to the resting position provided the sensor arrangement does not sense a person on the vehicle platform. Alternatively, the sensor arrangement may prevent the suspension structure from moving until a further operation is performed. A further operation may e.g. be engagement with a controller, flipping of a switch or closing of a door to the port.

In some embodiments, the port may further comprise a gate arranged at an edge portion of the vehicle platform, wherein the gate is configured to be closed when the suspension structure is in the goods-retaining position and to be open when the suspension structure is in the resting position.

Hereby, the vehicle is prevented from leaving the vehicle platform when the suspension structure is in the goods-retaining position.

According to a third aspect of the present invention, a method for unloading goods from a vehicle is provided, the method comprising: providing a safety arrangement according to the first aspect of the present invention in a resting position; positioning a vehicle carrying goods to be unloaded in a position alongside the safety arrangement, the goods being secured to the vehicle by a goods-securing means; moving the suspension structure of the safety arrangement to a goods-retaining position; and releasing a goods-securing means.

Hereby, a method with improved safety is provided, since releasing a goods-securing means when the suspension structure is in the goods-retaining position decreases the risk of the goods falling onto an operator when the goods-securing means is released.

In some embodiments, the method may further comprise: identifying by a sensor arrangement a position of any vehicle-supported crane; and restricting movement of a suspension structure of the safety arrangement based on information provided by the sensor arrangement.

Hereby, a more adaptable solution is provided, since the suspension structure may be restricted in such a way as to not limit the movement space of the identified vehicle-supported crane, such that the crane may participate in unloading of the goods. Also, there is no risk of the at least one flexible member of the curtain damaging such vehicle-supported crane.

For embodiments where there are two safety arrangements arranged on opposing sides of the vehicle, only movement of a suspension structure arranged closest to the vehicle-supported crane may be restricted.

In some embodiments, the method further comprises sensing by a sensor arrangement any person on the vehicle platform, and wherein the sensor arrangement is configured to prevent the suspension structure from moving from the goods-retaining position to the resting position.

Hereby, a solution with improved safety is provided.

The sensor arrangement may prevent the suspension structure from moving from the goods-retaining position to the resting position such that the suspension structure may be moved from the goods-retaining position to the resting position as soon as the sensor arrangement does not sense a person on the vehicle platform. Alternatively, the sensor arrangement may prevent the suspension structure from moving until a further operation is performed. A further operation may e.g. be flipping of a switch or closing of a door to the port.

According to a fourth aspect of the present invention, use of a safety arrangement according to the first aspect of the present invention for unloading a vehicle carrying timber is provided.

Any benefit or technical effect discussed in relation to the first, second or third aspect of the present invention may be applicable to the fourth aspect of the present invention.

### Brief description of the drawings

These and other embodiments of the present invention will now be described in more detail, with reference to the appended drawings showing exemplary embodiments of the present invention, wherein:
Fig. 1 is a schematic view of the safety arrangement according to the first aspect of the present invention.
Fig. 2 is a schematic perspective side view of a port according to the second aspect of the present invention, comprising a safety arrangement according to the first aspect of the present invention.
Fig. 3A is schematic front view of the port in Fig. 2, showing two safety arrangements in a resting position.
Fig. 3B is the schematic front view of Fig. 3A, wherein one safety arrangement is in a goods-retaining position.

### Detailed description of the drawings

In the following detailed description, some embodiments of the present invention will be described. However, it is to be understood that features of the different embodiments are exchangeable between the embodiments and may be combined in different ways, unless anything is specifically indicated. Even though in the following description, numerous details are set forth to provide a more thorough understanding of the present invention, it will be apparent to one skilled in the art that the present invention may be practiced without these details. In other instances, well known constructions, such as that of a vehicle, or functions, such as the act of unloading goods from a vehicle, are not described in detail, so as not to obscure the present invention.

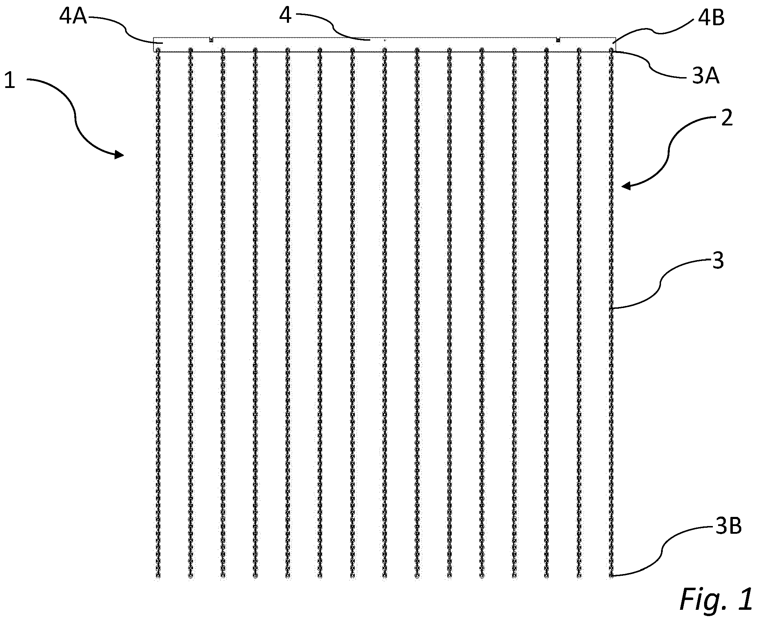

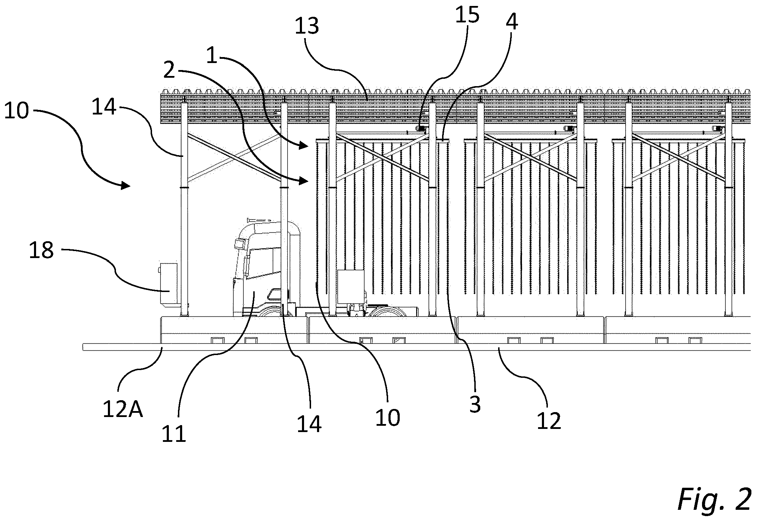

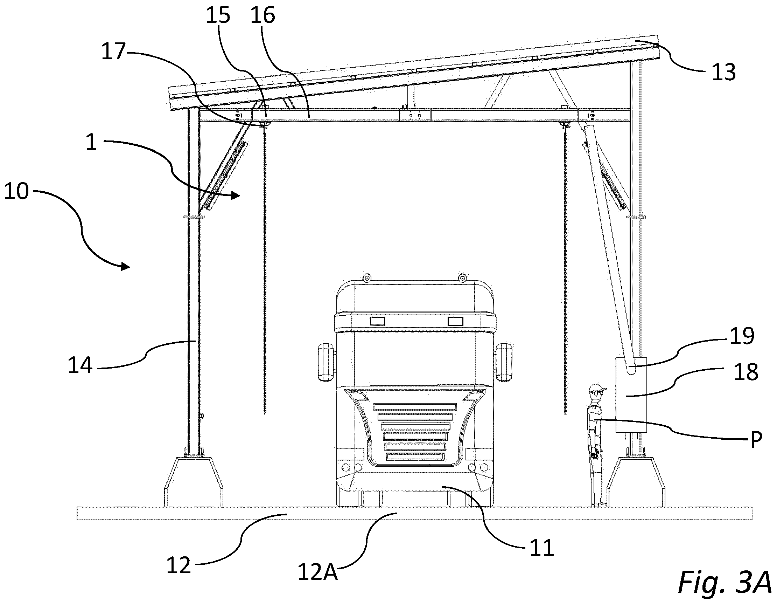

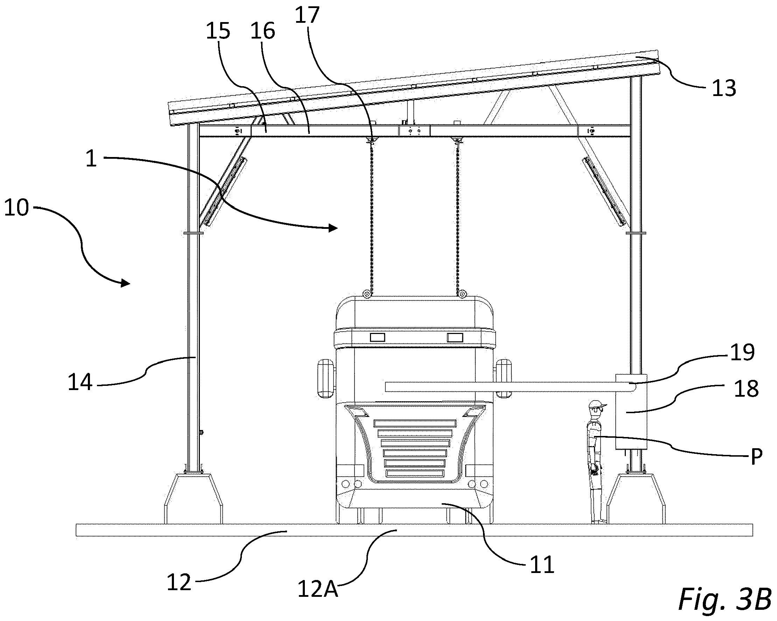

Fig. 1 is a schematic view of a safety arrangement 1 according to the first aspect of the present invention. The safety arrangement 1 is configured to be used as protection for personnel unloading goods from a vehicle 11 (shown in Fig. 2, 3A and 3B) by providing a barrier between the goods and personnel during unloading, thereby stopping falling goods from hitting the personnel. Especially, the safety arrangement 1 prevents falling goods during releasing of any goods-securing means securing the goods.

The safety arrangement 1 comprises a curtain 2 comprising at least one flexible member 3. Here, the curtain comprises a plurality of flexible members 3. Here, all flexible members 3 of the plurality of flexible members 3 are chains. A chain may e.g., be composed of plates, rings or loops interconnected by pins. Alternatively, the chain may be composed of only rings or loops interwoven with each other. A flexible member 3 may alternatively be any kind of flexible object such as a rope or a strap of cloth material, polymer material or rubber material, or a combination thereof. The plurality of flexible members 3 may comprise both chains and another type of flexible member. For example, the plurality of flexible members may comprise at least one chain and at least one rope. Alternatively, the curtain 2 comprises a matt or a net. The matt or net may be discontinuous. For example, the matt or net mat be provided with a plurality of slits along a longitudinal extension of the curtain 2. However, it is to be understood that the dimension, shape and material of any flexible member 3 should be well suitable for goods of varying dimensions, and especially for timber.

In Fig. 1, the chains 3 are arranged side-by-side and spaced apart such that any chain 3 is arranged at a distance to any neighboring chain 3. The distance between any two neighboring chains may e.g. be 10 cm, or 50 cm, or 100 cm, or 150 cm. The distance is dependent on the shape and dimension of the goods, since the flexible members 3 are to allow access to any goods-securing means of the vehicle, such that the goods-securing means may be released so as to allow unloading of the goods.

The safety arrangement 1 further comprises a suspension structure 4. The curtain 2 is suspended by the suspension structure 4. Each flexible member 3 has a vertical extension substantially perpendicular to the longitudinal extension of the suspension structure 4. Thus, each flexible member comprises a first end portion 3A which is attached to the suspension structure 4 and a second end portion 3B, distal to the first end portion 3A, which is hanging freely. Here, the suspension structure 4 is a beam. The beam 4 comprises a first distal end 4A and a second distal end 4B. The beam may e.g. be made of metal, a rigid polymer material, or wood. A suspension structure 4 may alternatively be any structure that is rigid and strong enough to suspend at least one flexible member 3. The beam 4 has a longitudinal extension, and the plurality of chains 3 are arranged along the longitudinal extension.

The suspension structure 4, and thus the safety arrangement 1, is in Fig. 1 shown in a resting position. That is, the safety arrangement 1 is not in use. The suspension structure 4 is configured to be movable from the resting position to a goods-retaining position. The safety arrangement 1, when in the goods-retaining position, provides a barrier between the goods and personnel unloading the goods, thereby providing safety for the personnel. The resting position and the goods-retaining position are further illustrated in Fig. 3A and 3B, respectively.

The suspension structure 4 may be moved in a variety of ways. For example, it may be moved by heavy equipment, such as a forklift or a crane. Alternatively, it may be suspended in a displacement system, e.g. arranged in a ceiling.

In Fig. 2, a port 10 for receiving a goods-carrying vehicle 11 is shown. Here, the vehicle 11 is a truck. However, the vehicle 11 may be any vehicle or vessel, such as a boat, adapted to carry goods. It is to be understood that details pertaining to the port 10 may vary depending on what type of vehicle or vessel to be received.

In Fig. 2, The port 10 comprises a vehicle platform 12. The vehicle platform 12 is configured to receive the truck 11. To this end, the vehicle platform 12 has a longitudinal extension. The vehicle platform 12 may be of any length, such that it may receive a truck 11, or other vehicle, of any length. The port 10 further comprises a roof 13 supported by a plurality of load-bearing pillars 14.

The port 10 further comprises a plurality of safety arrangements 1. Here, three safety arrangements 1 are shown. However, the port 10 may comprise any number of safety arrangements 1. The safety arrangements 1 are arranged along the longitudinal extension of the vehicle platform 12, and the longitudinal extension of the truck 11. Thus, the respective beam 4 of the safety arrangements 1 extend substantially parallel to the truck 11. Consequently, the freely hanging flexible members 3 are arranged substantially perpendicular to the truck 11. However, the safety arrangements 1 may extend non-parallel to the truck 11. Furthermore, a plurality of safety arrangements 1 does not have to be aligned. That is, any safety arrangement 1 in a plurality of safety arrangements 1 may have an extension offset an extension of any other safety arrangement 1.

The safety arrangement 1 is further suspended in the ceiling of the port 10 by a displacement system 15. The displacement system 15 is configured to move the beam 4 from a resting position to a goods-retaining position, and vice versa. The displacement system 15 is further illustrated in and discussed in relation to Fig. 3A and Fig. 3B.

The port 10 further comprises a controller 18 connected to and configured to operate a gate 19 (shown in Fig. 3A and Fig. 3B) arranged at an edge portion 12A of the vehicle platform 12. Thus, the gate 19 is arranged close to an exit of the port 10. The controller 18 and gate 19 are further illustrated in and discussed in relation to Fig. 3A and Fig. 3B.

Fig. 3A is schematic front view of the port in Fig. 2. Here, both of the displayed safety arrangements 1 are in a resting position. That is, both safety arrangements 1 are arranged distal to the vehicle 11, and any goods carried by the vehicle, and are thus not in use.

The displacement system 15 comprises a suspension rail 16 extending transverse to the longitudinal extension of the vehicle platform 12. Here, the suspension rail 16 therefore extends transverse to the vehicle 11 positioned in the port 10. The displacement system 15 further comprises a sliding element 17. Here, both safety arrangements 1 are attached to a respective sliding element 17. Preferably, the respective safety arrangements 1 are independently movable. Thus, the respective sliding elements 17 of the displacement system 15 are preferably independently movable.

The sliding element 17 is configured to slideably engage with the suspension rail 16. Thus, the sliding element 17 of the displacement system 15 may move the safety arrangement 1 along the suspension rail 16. Hereby, the sliding element 17 of the displacement system 15 is configured to move the beam 4 of the safety arrangement 1 from a resting position to a goods-retaining position, and vice versa. The sliding element 17 may be designed in a variety of ways. The sliding element 17 may e.g. comprise an attachment element, such as a hook, for attachment with the beam 4. Alternatively, the beam 4 may be permanently attached to the sliding element 17, e.g. by welding the beam 4 thereto. The sliding element 17 may further be displaced in a variety of ways. For example, the sliding element 17 may be displaced by an electrical motor.

The displacement system 15 may further comprise a first and second sliding element 17, arranged on the same side of the displacement system 15, and attached to a respective distal end 4A, 4B (shown in Fig. 1) of the beam 4 of the safety arrangement 1. Furthermore, the displacement system may to this end comprise a first and second suspension rail 16, wherein the first and second sliding elements 17 are configured to slideably engage with a respective suspension rail 16. The displacement system 15 may alternatively comprise any number of sliding elements 17 and/or suspension rails 16, wherein any beam 4 may be suspended by any number of sliding elements 17.

In Fig. 3A, the gate 19 is shown in a raised position. The controller 18 is configured to arrange the gate 19 in the raised position when at least one of the safety arrangements 1 are in a resting position. Preferably, the controller 18 is configured to arrange the gate 19 in a raised position when all safety arrangements 1 are in a resting position. The gate 19 is here shown as being attached to the controller 18. However, the gate 19 is not limited to being attached to the controller 18, but may be arranged separate to the controller 18. Communication between the controller 18 and the gate 19 may be facilitated electrically or wirelessly. The controller 18 may further be configured to control the displacement system 15, and therefore control movement of the safety arrangement(s) 1 from a goods-retaining position to a resting position. The controller 18 is further in Fig. 2 and Fig. 3A shown as being arranged on a load-bearing pillar 14 of the port 10. However, the controller 18 may be arranged anywhere in the vicinity of the port 10. Alternatively, the controller 18 may be provided as a computerized device in wireless connection with the gate 19 and/or the displacement system 15.

The controller 18 may be configured to be operated by a personnel P. The personnel P may be the same person operating the vehicle 11. Hereby, removal of the vehicle 11 from the port 10 necessitates the personnel P first removing themselves from the vehicle 11, especially the side of the vehicle 11 and any goods left on the vehicle. Thus, any leftover goods on the vehicle 11 falling down on the personnel P at the moving of any safety arrangement 1 from a goods-retaining position back to a resting position.

As such, Fig. 3A may illustrate a situation where the vehicle 11 has just entered the port 10, after which the personnel P has operated the controller 18 in order to bring the safety arrangement(s) 1 from a resting position to a goods-retaining position, such that goods carried on the vehicle 11 may be safely unloaded. Alternatively, Fig. 3A may illustrate a situation where goods have already been unloaded from the vehicle 11, after which the personnel P has operated the controller 18 in order to bring the safety arrangement(s) 1 from the goods-retaining position to the resting position, thereby also bringing the gate 19 to a raised position, such that the vehicle 11 is allowed to exit the port 10.

Alternatively, the controller 18 may be automated. For example, upon positioning of the vehicle 11 in the port 10, the controller 18 may be configured to automatically bring the safety arrangement(s) 1 from a resting position to a goods-retaining position. The controller 18 may further be configured to bring the gate 19 from a raised position to a lowered position, such that the vehicle 11 is blocked from exiting the port 10.

The controller 18 may further be communicatively connected to a sensor arrangement. The sensor arrangement may e.g. be configured to sense a presence of any personnel P on the vehicle platform 12. The sensor arrangement may further be configured to prevent the beam 4 of the safety arrangement 1 from moving from the goods-retaining position to the resting position if the personnel P is within a predetermined distance to the vehicle. The sensor arrangement may further be configured to prevent the beam 4 of the safety arrangement 1 from moving from the goods-retaining position to the resting position if the vehicle 11 is not positioned within a predetermined zone of the vehicle platform 12. Additionally or alternatively, the sensor arrangement may prevent the beam 4 from moving until a further operation is performed. A further operation may be engagement with the controller 18. A further operation may further be flipping of a switch or closing of a door of the port, or any structure in the vicinity of the port, such as a control room.

The sensor arrangement may comprise a camera. Additionally or alternatively, the sensor arrangement may comprise an optical movement sensor. Additionally or alternatively, the sensor arrangement may comprise an IR sensor. Additionally or alternatively, the sensor arrangement may comprise a radar sensor.

In Fig. 3B, the safety arrangements 1 are shown in a goods-retaining position. Here, the safety arrangements 1 are arranged such that the distance between the two arrangements 1 are shorter than the width of the truck 11, and therefore the width of the trailer of the truck 11. Hereby, the goods may be brought to a position wherein the flexible members 3 at least partially conform to the goods.

The safety arrangements 1 may be independently movable. Thus, one safety arrangement 1 may be brought into a resting position, as shown in Fig. 3A, whereas another safety arrangement 1 may be brought into the goods-retaining position, as shown in Fig. 3B.

The vehicle 11 may comprise further structural elements limiting the movement of one or more safety arrangements. For example, the vehicle 11 may comprise a vehicle-supported crane. In such a case, the safety arrangements 1 may be moved so as to avoid the crane. This may e.g. be performed by identifying by a sensor arrangement a position of the vehicle-supported crane. After identification, restricting movement of one or more suspension structures 4 of the safety arrangement based 1 on information provided by the sensor arrangement may be performed.

The invention has been exemplified in the context of the vehicle being a truck and hence that the the vehicle platform is landbased, such as in a garage or a parking area. The skilled person realizes that the vehicle in other embodiments may be a boat, in which event vehicle platform will be the water along a quayside.

The person skilled in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting the claim. The word "comprising" does not exclude the presence of other elements or steps than those listed in the claim. The word "a" or "an" preceding an element does not exclude the presence of a plurality of such elements.

### Itemized list of exemplifying embodiments

IEE1. Safety arrangement (1) for unloading of goods from a vehicle (11), the safety arrangement (1) comprising:
a curtain (2) comprising at least one flexible member (3); and a suspension structure (4);
wherein the curtain (2) is suspended by the suspension structure (4), and wherein the suspension structure (4) is configured to be movable from a resting position to a goods-retaining position.

IEE2. Safety arrangement (1) according to claim 1, wherein the at least one flexible member (3) is configured to at least partially conform to the goods when the suspension structure (4) is in the goods-retaining position.

IEE3. Safety arrangement (1) according to claim 1 or 2, wherein the at least one flexible member (3) is a chain, and the curtain (2) comprises a plurality of flexible members (3) arranged side-by-side.

IEE4. Safety arrangement according to claim 3, wherein the plurality of flexible members (3) is spaced apart such that any flexible member (3) is arranged at a distance to any neighboring flexible member (3).

IEE5. Port (10) for receiving a goods-carrying vehicle, the port (10) comprising:
a vehicle platform (12) configured to receive a goods-carrying vehicle (11), the vehicle platform (12) having a longitudinal extension;
a displacement system (15) comprising at least one suspension rail (16) extending transverse to the longitudinal extension of the vehicle platform (12); and
at least one safety arrangement (1) according to claim 1, the at least one safety arrangement (1) being suspended by the at least one suspension rail (16);
wherein the displacement system (15) is configured to move the suspension structure (4) of the at least one safety arrangement (1) from the resting position to the goods-retaining position.

IEE6. Port (10) according to claim 5, wherein the port (10) comprises at least two safety arrangements (1) on opposing sides of the vehicle platform (12) as seen along the longitudinal extension of the vehicle platform (12), wherein the respective suspension structure (4) of the at least two safety arrangements (1) are independently movable.

IEE7. Port (10) according to claim 5 or 6, further comprising a sensor arrangement configured to sense any person (P) on the vehicle platform (12), and wherein the sensor arrangement is configured to prevent the suspension structure (4) from moving from the goods-retaining position to the resting position.

IEE8. Method for unloading goods from a vehicle (11), the method comprising:
providing a safety arrangement (1) according to claim 1 in a resting position;
positioning a vehicle (11) carrying goods to be unloaded in a position alongside the safety arrangement (1), the goods being secured to the vehicle by a goods-securing means;
moving the suspension structure (4) of the safety arrangement (1) to a goods-retaining position; and
releasing a goods-securing means.

IEE9. Method according to claim 8, further comprising:
identifying by a sensor arrangement a position of any vehicle-supported crane; and
restricting movement of a suspension structure of the safety arrangement (1) based on information provided by the sensor arrangement. Use of a safety arrangement (1) according to claim 1 for unloading a vehicle (11) carrying timber.

IEE10. Use of a safety arrangement (1) according to claim 1 for unloading a vehicle (11) carrying timber.

## Claims

1. Safety arrangement (1) for unloading of goods from a vehicle (11), the safety arrangement (1) comprising:
a curtain (2) comprising a plurality of flexible members (3); and
a suspension structure (4) having a longitudinal extension;
wherein the curtain (2) is suspended by the suspension structure (4), and wherein the suspension structure (4) is configured to be movable from a resting position to a goods-retaining position in which the longitudinal extension of the suspension structure (4) is arranged parallel to a longitudinal extension of said vehicle (11), wherein each flexible member (3) is configured to at least partially conform to the goods when the suspension structure (4) is in the goods-retaining position.

2. Safety arrangement (1) according to claim 1, wherein each flexible member (3) is a chain.

3. Safety arrangement according to claim 1 or 2, wherein the plurality of flexible members (3) is spaced apart such that any flexible member (3) is arranged at a distance to any neighboring flexible member (3).

4. Port (10) for receiving a goods-carrying vehicle, the port (10) comprising:
a vehicle platform (12) configured to receive a goods-carrying vehicle (11), the vehicle platform (12) having a longitudinal extension;
a displacement system (15) comprising at least one suspension rail (16) extending transverse to the longitudinal extension of the vehicle platform (12); and
at least one safety arrangement (1) according to claim 1, the at least one safety arrangement (1) being suspended by the at least one suspension rail (16);
wherein the displacement system (15) is configured to move the suspension structure (4) of the at least one safety arrangement (1) from the resting position to the goods-retaining position.

5. Port (10) according to claim 4, wherein the port (10) comprises at least two safety arrangements (1) on opposing sides of the vehicle platform (12) as seen along the longitudinal extension of the vehicle platform (12), wherein the respective suspension structure (4) of the at least two safety arrangements (1) are independently movable.

6. Port (10) according to claim 4 or 5, further comprising a sensor arrangement configured to sense any person (P) on the vehicle platform (12), and wherein the sensor arrangement is configured to prevent the suspension structure (4) from moving from the goods-retaining position to the resting position.

7. Method for unloading goods from a vehicle (11), the method comprising:
providing a safety arrangement (1) according to claim 1 in a resting position;
positioning a vehicle (11) carrying goods to be unloaded in a position alongside the safety arrangement (1), the goods being secured to the vehicle by a goods-securing means;
moving the suspension structure (4) of the safety arrangement (1) to a goods-retaining position; and
releasing a goods-securing means.

8. Method according to claim 8, further comprising:
identifying by a sensor arrangement a position of any vehicle-supported crane; and
restricting movement of a suspension structure of the safety arrangement (1) based on information provided by the sensor arrangement.

9. Use of a safety arrangement (1) according to claim 1 for unloading a vehicle (11) carrying timber.
